# EUROPÄISCHE PATENTSCHRIFT

(11) **EP 0 558 035 B1**
(45) Veröffentlichungstag und Bekanntmachung des Hinweises auf die Patenterteilung: **22.05.1996**
(21) Anmeldenummer: 93103056.3
(22) Anmeldetag: 26.02.1993
(51) Int. Cl.: B65G 57/20

(54) **Vorrichtung zum Abstapeln von Schalen oder dergleichen, insbesondere Geschirrschalen**
Stacking device for bowls, especially dish bowls
Dispositif pour empiler des coupelles, notamment des coupelles de vaisselles

(30) Priorität: 26.02.1992 DE 4205923
(43) Veröffentlichungstag der Anmeldung: 01.09.1993
(73) Patentinhaber: PREMARK FEG CORPORATION, Wilmington, Delaware 19801 (US)
(72) Erfinder: Litterst, Jürgen, Dipl.-Ing., W-7600 Offenburg (DE)
(74) Vertreter: Füchsle, Klaus, Dipl.-Ing.

(56) Entgegenhaltungen:
- DE-A- 2 709 734
- US-A- 4 154 347

## Beschreibung

Die Erfindung betrifft eine Vorrichtung zum Abstapeln von Schalen oder dergleichen, insbesondere Geschirrschalen, welche von einer Wasch- oder Spülmaschine ausgegeben sind.

Vor allem in Großküchen oder Kantinenbetrieben besteht die Notwendigkeit, gewaschenes und getrocknetes Geschirr möglichst schnell, entweder für eine Lagerung oder zum weiteren Gebrauch, wieder bereitzustellen. Ein Aufstapeln per Hand ist dabei wegen der Vielzahl der anfallenden Schalen, Teller usw., im allgemeinen nicht akzeptabel.

Es ist daher die Aufgabe der Erfindung, eine Vorrichtung zum Abstapeln von Schalen oder dergleichen bereitzustellen, welche automatisch und kontinuierlich von einer Wasch- oder Spülmaschine ausgegebenes Geschirr einer Endlagerstation zuführt.

Diese Aufgabe wird von einer Vorrichtung mit den Merkmalen nach Patentanspruch 1 gelöst. Vorteilhafte Ausgestaltungen sind Gegenstand der Unteransprüche.

Erfindungsgemäß besteht die Vorrichtung zum Abstapeln von Schalen oder dergleichen aus einer ersten Fördereinrichtung, welche die aus der Wasch- oder Spülmaschine in ihrer Waschlage ausgegebenen Schalen übernimmt, einer zweiten Fördereinrichtung im Anschluß an die erste Fördereinrichtung, welche die Schalen von der ersten Fördereinrichtung aufnimmt und sukzessive linear ausgerichtet weiterbefördert, einer Zwischenlagerstation, in der eine Vielzahl von Schalen zum gemeinsamen Weitertransport zu sammeln sind, und einer Umsetzstation zum Ablegen der Vielzahl von Schalen in einer Endlagerstation. Während die erste Fördereinrichtung vorwiegend für den Abtransport der Schalen aus der Wasch- oder Spülmaschine sorgt, bereitet die zweite Fördereinrichtung eine gewünschte Anordnung und Ausrichtung der einzelnen Schalen vor, so daß sie beispielsweise eine nach der anderen aufeinanderfolgend weiterbefördert werden. Auch eine Weiterbeförderung als Schalenpaare wäre denkbar. In der Zwischenlagerstation wird dann eine bestimmte Anzahl von Schalen gesammelt und mittels einer Umsetzstation in die Endlagerstation überführt. Die Endlagerstation wird dabei zweckmäßigerweise ein fahrbarer Container oder dergleichen sein.

Nach einer bevorzugten Ausführungsform der Erfindung weist die zweite Fördereinrichtung zumindest abschnittsweise eine Förderbreite auf, die im wesentlichen dem Durchmesser der zu fördernden Schalen entspricht. So ist gewährleistet, daß die von der ersten Fördereinrichtung ankommenden Schalen einzeln weiterbefördert werden.

Dabei kann die Förderrichtung der zweiten Fördereinrichtung unter einem Winkel α zur Förderrichtung der ersten Fördereinrichtung ausgerichtet sein. Obwohl es grundsätzlich möglich wäre, die von der ersten Fördereinrichtung vorgegebene Förderrichtung beizubehalten und beispielsweise den Eingang zur zweiten Fördereinrichtung als entsprechend gestaltete Verengung vorzusehen, hat es sich gezeigt, daß die Bruchgefahr erheblich vermindert wird, wenn das Ausrichten der Schalen mit einer Richtungsänderung verbunden ist.

Dabei beträgt der Winkel α vorzugsweise etwa 90°.

Falls die Waschlage der Schalen nicht mit der gewünschten, endgültigen Stapellage übereinstimmt, kann gemäß einer weiter bevorzugten Ausführungsform der Erfindung eine Wendestation vorgesehen sein. Die Schalen können dann in einer solchen Wendestation oder mit Hilfe mehrerer Wendestationen in die gewünschte Lage gebracht werden.

Aus Zweckmäßigkeitsgründen ist die Waschlage der Schalen im allgemeinen so, daß die Schalenöffnung zur Auflagefläche der Fördereinrichtung weist. Dann ist einerseits ein besonderes effektives Reinigen möglich, andererseits werden die Schalen in einer relativ stabilen Lage weiterbefördert. Die optimale Stapellage hingegen ist gegenüber der Waschlage um 180° gedreht. Obwohl danach die Wendestation an nahezu beliebiger Position in der Vorrichtung angeordnet sein kann, ist es bevorzugt, daß die Wendestation bzw. die Wendestationen zumindest im Anschluß an die zweite Fördereinrichtung vorgesehen ist/sind. Dann kann die stabile Lage der Schalen vorteilhaft zu deren Ausrichtung beitragen, während das eigentliche Stapeln anschließend vorbereitet wird.

Es hat sich als vorteilhaft herausgestellt, daß die Wendestation(en) jeweils eine Plattform aufweist/aufweisen, auf der die zu wendende Schale gleitbar ruht, wobei ein über die Plattform bewegbarer Schieber vorgesehen ist, welche die Schale über die Plattform hinaus in eine um mindestens 90° verkippte Position bringt.

Die Endlagerstation ist bevorzugt ein Container, zweckmäßigerweise ein verfahrbarer Container, mit federgelagerter Auflageplattform für die Schalen in ihrer Stapellage. Die Auflageplattform wird sich umso weiter absenken, mit je mehr Schalen sie belastet ist. Durch geeignete Wahl der Federkonstanten wird erreicht, daß beim Umsetzen der Schalen in die Container ein minimaler Hubweg erforderlich wird.

Weiterhin kann vorgesehen sein, daß vor der Zwischenlagerstation eine dritte Fördereinrichtung vorgesehen ist, welche jeweils eine Anzahl Schalen synchron geführt zur Zwischenlagerstation transportiert. Dies erleichtert das gleichzeitige Umsetzen mehrerer Schalen.

Bevorzugt weist die dritte Fördereinrichtung eine der Anzahl der synchron zu führenden Schalen entsprechende Anzahl Förderbänder auf, wobei zwischen benachbart laufenden Förderbändern Stege angeordnet sind. So werden durch die Kombination von Förderbändern und Stegen Führungen geschaffen, die die Schalen der Zwischenlagerstation zuleiten, wobei der zur Verfügung stehende Raum optimal ausgenutzt wird, ohne daß die Gefahr besteht, daß die Schalen beispielsweise aneinander reiben oder sich gegenseitig zerstören. Es können die Stege in ihrem Querschnitt den angrenzenden Bereichen der Schalen mehr oder weniger angepaßt sein, es hat sich aber als zweckmäßig und ausreichend erwiesen, die Stege im Querschnitt dreieckförmig auszubilden.

Die Umsetzstation weist vorteilhaft eine der Anzahl der umzusetzenden Schalen entsprechende Anzahl von Greifer-Anordnungen auf, in welchen die umzusetzenden Schalen einzuspannen sind.

Um synchron zugeführte Schalen umsetzen zu können, ist es bevorzugt, daß die Greifer-Anordnungen als bauliche Einheit ausgebildet sind.

Das Umsetzen wird weiter erleichtert, wenn die dritte Fördereinrichtung als Zwischenlagerstation mit der Umsetzstation zusammenwirkend ausgebildet ist, indem sie nämlich einen die Förderstrecke begrenzenden Anschlag aufweist.

Im folgenden soll die Erfindung lediglich beispielhaft anhand der beigefügten Zeichnungen näher erläutert werden. Dabei zeigt:
- Fig. 1: eine stark schematisierte Draufsicht auf eine Vorrichtung zum Abstapeln von Schalen oder dergleichen gemäß der vorliegenden Erfindung;
- Fig. 2: eine Teilansicht der Vorrichtung aus Fig. 1 von der Seite;
- Fig. 3: eine Detaildarstellung der Wendestation, wobei im Teilbild (a) der Beginn und der Abschluß des Wendevorganges für eine Schale dargestellt ist, im Teilbild (b) eine Zwischenposition der Schale während des Wendevorganges;
- Fig. 4: eine Schnittansicht längs der Linie A-A aus Fig. 1;
- Fig. 5: eine Detaildarstellung der dritten Fördereinrichtung im Bereich der Umsetzstation; und
- Fig. 6: in einer schematischen Darstellung das Zusammenwirken der dritten Fördereinrichtung und der Umsetzstation.

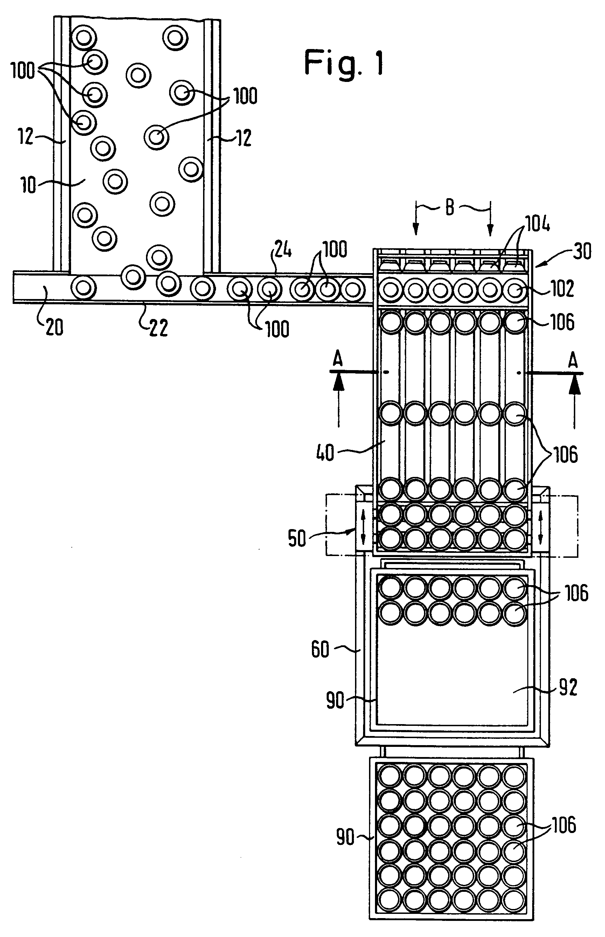

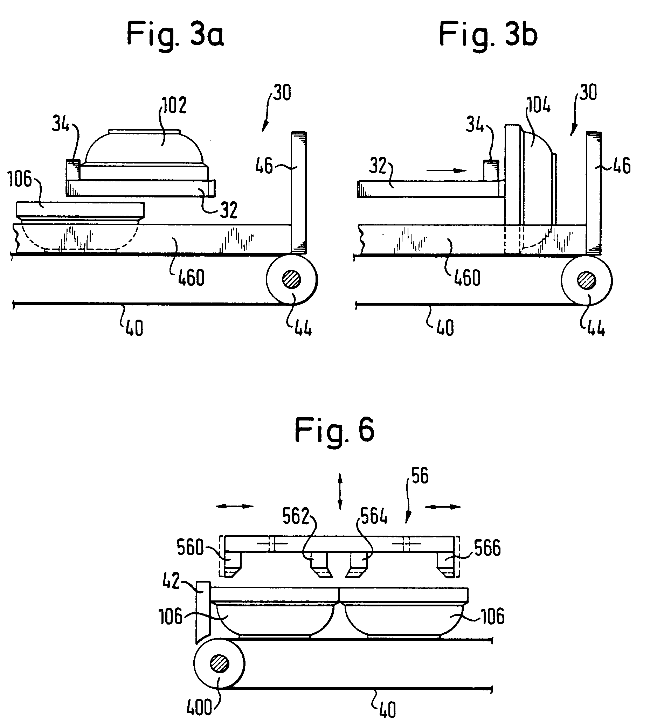

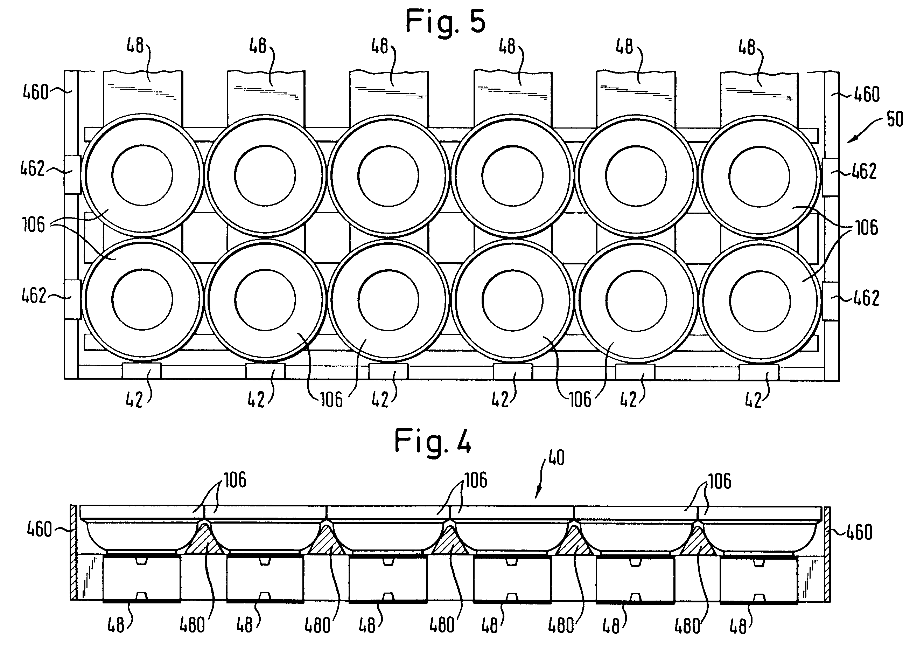

Fig. 1 zeigt, schematisch dargestellt, eine Draufsicht auf eine Vorrichtung gemäß der vorliegenden Erfindung. Von einer Wasch- oder Spülmaschine, die in der Figur nicht dargestellt ist, wird eine Vielzahl von Schalen 100 in ihrer Waschlage auf eine erste Fördereinrichtung 10, die als Förderband ausgebildet ist, gegeben. In der Waschlage liegen die Schalen 100 mit ihrer Öffnung auf dem Förderband 10 auf. Beidseits des Förderbandes 10 sind Seitenbegrenzungen 12 vorgesehen, die ein Abrutschen der Schalen 100 verhindern. Die Schalen 100 werden von den mit einer festlegbaren Geschwindigkeit betreibbaren Förderband 10 auf eine zweite Fördereinrichtung 20 zu bewegt, deren Förderrichtung etwa unter einem rechten Winkel zu dem der ersten Fördereinrichtung 10 verläuft. Auch die zweite Fördereinrichtung 20 ist als Förderband ausgebildet, dessen Breite etwa dem Durchmesser der Schalen 100 entspricht. Die auf das Förderband 20 auflaufenden Schalen 100 werden durch die das zweite Förderband 20 begrenzende Anschlagwand 22 aus ihrer ursprünglichen Bewegungsrichtung umgelenkt und zwischen die Anschlagwand 22 und eine Führungswand 24, die das Förderband 20 auf der gegenüberliegenden Seite begrenzt, geführt. Das Förderband 20 transportiert die nunmehr ausgerichteten Schalen 100 in eine Wendestation 30. Sobald sechs Schalen 102 in ihrer Waschlage in die Wendestation 30 eingelaufen sind, werden sie auf eine im Zusammenhang mit Fig. 3 noch näher zu beschreibende Weise zunächst in eine Vertikallage gebracht, wobei die vertikal verkippten Schalen 104 wiederum in eine Richtung senkrecht zur Förderrichtung des zweiten Förderbandes 20 bewegt sind. Anschließend werden sie mit Unterstützung einer dritten Fördereinrichtung 40 in ihre endgültige Stapellage gedreht, wie es beispielhaft an den Schalen 106 gezeigt ist, bei denen nunmehr die Schalenöffnung von der Fördereinrichtung wegweist. Jeweils sechs in ihre Stapellage gebrachte Schalen 106 werden synchron durch die dritte Fördereinrichtung 40, die auch die Funktion einer Zwischenlagerstation übernimmt und die in Fig. 4 genauer beschrieben wird, weiter zu einer Umsetzstation 50 befördert. Nachdem zweimal sechs Schalen in die Umsetzstation 50 eingelaufen sind, werden sie gemeinsam auf eine federgelagerte Auflageplattform 92 eines Containers 90 gebracht, der in einem der Umsetzstation 50 nachgeschalteten Ladeportal 60 in einer geeigneten Position ausgerichtet ist. Sobald ein Container 90 vollständig beladen ist, wird er aus dem Ladeportal 60 hinausgefahren. Leere Container werden im Bereich der Wendestation 30 unter die Fördereinrichtung 40 in Richtung der Pfeile B eingefahren.

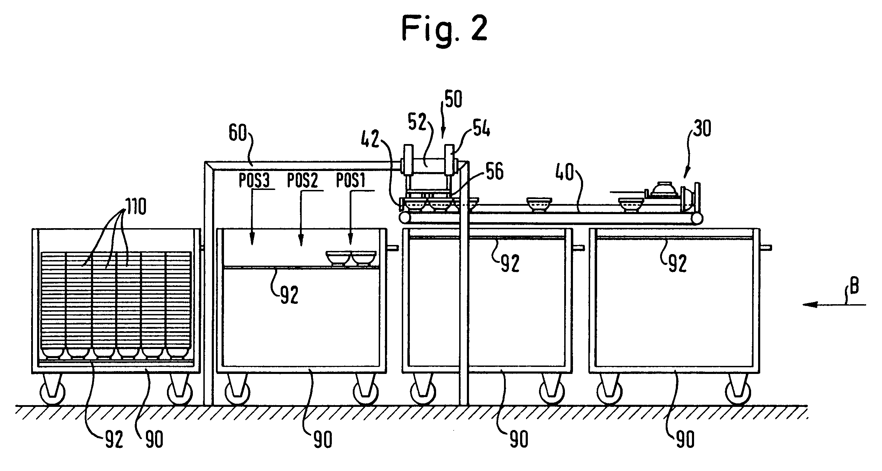

Diese ist nochmals besonders deutlich in Fig. 2 dargestellt. Unterhalb der Wendestation 30 bzw. der Fördereinrichtung 40 laufen leere Container 90 ein, deren Auflageplatten 92 sich in einer obersten Position befinden. Die Umsetzstation 50 ist am Ladeportal 60 festgelegt, wobei das Ladeportal 60 so bemessen ist, daß ein Container 90 vollständig und ein zweiter, diesem nachlaufender Container teilweise in das Ladeportal 60 eingefahren werden können.

Der nachlaufende Container befindet sich mit seiner in Bewegungsrichtung vorderen Wand noch unterhalb der Fördereinrichtung 40. Die in der Umsetzstation 50 eingelaufenen Schalenreihen werden mittels einer Greifvorrichtung 56 ergriffen und durch einen damit verbundenen vertikalen Linearantrieb 54 angehoben. Ein horzontaler Linearantrieb 52 sorgt dann für eine Verlagerung der Schalenreihen in eine der mit POS1, POS2 oder POS3 bezeichneten Positionen auf der federbelasteten Auflageplattform 92 eines Containers 90. Durch das Gewicht der Schalen wird die Auflageplattform 92 abgesenkt, bis sie schließlich, bei vollständig befülltem Container 90, sich im Bodenbereich des Containers befindet. Der mit Schalenstapeln 110 befüllte Container 90 wird dann, nachdem er aus dem Ladeportal 60 ausgefahren ist, zu seinem Bestimmungsort gebracht.

Um zu verhindern, daß die in die Umsetzstation 50 transportierten Schalenreihen aus einer optimalen Greifposition entfernt werden, ist an der dritten Fördereinrichtung 40 ein Anschlag 42 angebracht, was ein zumindest kurzzeitiges Zwischenlagern der Schalen bewirkt.

Fig. 3 zeigt in den Teilbildern (a) und (b) die Wendestation 30 im Detail, wobei auch der Funktionsablauf angedeutet ist. In Teilbild (a) ist eine Schale 102 in Waschlage dargestellt, die auf eine horizontal liegende Wendeplattform 32 aufgefahren worden ist. Mit Hilfe eines Schiebers 34, der über die Wendeplattform bewegbar ist, wird die Schale 102 in Richtung auf eine Anschlagplatte 46 geschoben, wobei sie, wie aus Teilbild (b) hervorgeht, in eine vertikale Lage gekippt wird. Die vertikal gekippte Schale 104 liegt mit einem Schalenrand auf der dritten Fördereinrichtung 40 auf und wird von dieser mitgenommen. Durch die Transportbewegung der Fördereinrichtung 40 wird die Drehbewegung der Schale 104 fortgeführt, bis sie sich in ihrer Stapellage befindet, also in der Lage der Schale 106 im Teilbild (a). Die Anschlagplatte 46 befindet sich oberhalb einer Umlenkrolle 44 für die Fördereinrichtung 40, sie verhindert, daß eine Schale von der Fördereinrichtung 40 abrutscht. Eine seitliche Begrenzung 460 ist ebenfalls vorgesehen.

Fig. 4 zeigt eine Schnittansicht längs der Linie A-A aus Fig. 1. Aus dieser Figur wird der Aufbau der Fördereinrichtung 40 (Fig. 1) deutlich. Die Fördereinrichtung 40 besteht aus sechs parallel laufenden Förderbändern 48, deren Breite so gewählt ist, daß sie etwa mit dem Durchmesser des Schalenbodens übereinstimmt. Der gegenseitige Abstand der Förderbänder 48 ist derart gewählt, daß die Schalenränder nebeneinanderliegender Schalen genau oder nahezu aneinanderstoßen. Zwischen jeweils benachbarten Förderbändern 48 ist ein parallel zu diesen verlaufender Steg 480 mit dreieckförmigem Querschnitt angeordnet. Jeweils eine seitliche Begrenzung 460, ein Förderband 48 und ein Steg 480 oder zwei Stege 480 und ein dazwischenliegendes Förderband 48 bilden eine Führung für die entsprechende auf dem Förderband 48 ruhende Schale 106.

Fig. 5 zeigt die Ausgestaltung der Fördereinrichtung 40 im Bereich der Umsetzstation 50 (Fig. 1). Die auf den Förderbändern 48 einlaufenden Schalen 106, die in Gruppen zu jeweils sechs Schalen ankommen, stoßen an Anschläge 42, die am Ende der Fördereinrichtung vorgesehen sind. An den seitlichen Begrenzungen 460 sind im Bereich der Schalenreihen weitere Anschläge 462 vorgesehen. So werden zweimal sechs Schalen 106 im Endbereich der Fördereinrichtung gestaut und können dann mittels der Umsetzstation weitertransportiert werden.

Schließlich zeigt Fig. 6 Details der Greifvorrichtung 56 der Umsetzstation 50 (Fig. 2). Die Fördereinrichtung 40 hat zwei Reihen zu jeweils sechs Schalen 106 herantransportiert, wobei die in Förderrichtung vordere Schale jeweils an dem Anschlag 42 anliegt, der oberhalb einer Umlenkrolle 400 für das jeweilige Förderband der Fördereinrichtung 40 angeordnet ist. Nachdem die Schalen 106 nun in einer stabilen Position sind, wird die Greifvorrichtung 56 vertikal abgesenkt, so daß Greifer 560, 562, 564, 566 in zwei hintereinander liegende Schalen 106 eingreifen können. Jeweils zwei dieser Greifer 560, 562 und 564, 566 bilden ein Paar, das durch eine Spanneinrichtung auseinandergedrückt werden kann, so daß zumindest die jeweils außen liegenden Greifer 560, 566 in Richtung auf den Schalenrand verlagert werden können, bis die Greifvorrichtung 56 sämtliche Schalen beider Reihen simultan faßt und dann in Richtung des Pfeiles C von der Fördereinrichtung 40 abhebt.

Mit der erfindungsgemäßen Vorrichtung ist es möglich, aus einer Wasch- oder Spülmaschine ausgegebene Schalen oder dergleichen automatisch und kontinuierlich für die weitere Verwendung zu stapeln.

## Patentansprüche

1. Vorrichtung zum Abstapeln von Schalen oder dergleichen, insbesondere Geschirrschalen, welche von einer Wasch- oder Spülmaschine ausgegeben sind,
bestehend aus
- einer ersten Fördereinrichtung (10), welche die aus der Wasch- oder Spülmaschine in ihrer Waschlage ausgegebenen Schalen (100) übernimmt,
- einer zweiten Fördereinrichtung (20) im Anschluß an die erste Fördereinrichtung (10), welche die unausgerichteten Schalen von der ersten Fördereinrichtung (10) aufnimmt und sukzessive linear ausgerichtet weiterbefördert,
- einer Zwischenlagerstation (40, 42), in der eine Vielzahl von Schalen zum gemeinsamen Weitertransport zu sammeln sind, und
- einer Umsetzstation (50) zum Ablegen der Vielzahl von Schalen in wenigstens einer Endlagerstation (90).

2. Vorrichtung nach Anspruch 1, dadurch gekennzeichnet, daß die zweite Fördereinrichtung (20) zumindest abschnittsweise eine Förderbreite aufweist, die im wesentlichen dem Durchmesser der zu fördernden Schalen entspricht.

3. Vorrichtung nach Anspruch 1 oder 2, dadurch gekennzeichnet, daß die Förderrichtung der zweiten Fördereinrichtung (20) unter einem Winkel α zur Förderrichtung der ersten Fördereinrichtung (10) ausgerichtet ist.

4. Vorrichtung nach Anspruch 3, dadurch gekennzeichnet, daß der Winkel α etwa 90° beträgt.

5. Vorrichtung nach einem der Ansprüche 1 bis 4, dadurch gekennzeichnet, daß, falls die Waschlage der Schalen nicht mit der gewünschten endgültigen Stapellage übereinstimmt, wenigstens eine Wendestation (30) vorgesehen ist.

6. Vorrichtung nach Anspruch 5, dadurch gekennzeichnet, daß die Wendestation(en) (30) zumindest im Anschluß an die zweite Fördereinrichtung (20) vorgesehen ist/sind.

7. Vorrichtung nach Anspruch 5 oder 6, dadurch gekennzeichnet, daß die Wendestation(en) jeweils eine Plattform (32) aufweist/aufweisen, auf der die zu wendende Schale (102) gleitbar ruht, wobei ein über die Plattform (32) bewegbarer Schieber (34) vorgesehen ist, welcher die Schale (102) über die Plattform (32) hinaus in eine um mindestens 90° verkippte Position bringt.

8. Vorrichtung nach einem der Ansprüche 1 bis 7, dadurch gekennzeichnet, daß die Endlagerstation ein Container (90) mit federgelagerter Auflageplattform (92) für die Schalen in ihrer Stapellage ist.

9. Vorrichtung nach einem der Ansprüche 5 bis 8, dadurch gekennzeichnet, daß vor der Zwischenlagerstation (40, 42) eine dritte Fördereinrichtung (40) vorgesehen ist, welche jeweils eine Anzahl Schalen synchron geführt zur Zwischenlagerstation transportiert.

10. Vorrichtung nach Anspruch 9, dadurch gekennzeichnet, daß die dritte Fördereinrichtung (40) eine der Anzahl der synchron zu führenden Schalen entsprechende Anzahl von Förderbändern (48) aufweist, wobei zwischen benachbart laufenden Förderbändern (48) Stege (480) angeordnet sind.

11. Vorrichtung nach Anspruch 10, dadurch gekennzeichnet, daß die Stege (480) im Querschnitt dreieckförmig sind.

12. Vorrichtung nach einem der Ansprüche 1 bis 11, dadurch gekennzeichnet, daß die Umsetzstation (50) eine der Anzahl der umzusetzenden Schalen entsprechende Anzahl von Greifer-Anordnungen (560, 562; 564, 566) aufweist, in welchen die umzusetzenden Schalen einzuspannen sind.

13. Vorrichtung nach Anspruch 12, dadurch gekennzeichnet, daß die Greifer-Anordnungen (560, 562; 564, 566) als bauliche Einheit ausgebildet sind.

14. Vorrichtung nach einem der Ansprüche 9 bis 13, dadurch gekennzeichnet, daß die dritte Fördereinrichtung (40) wenigstens einen die Förderstrecke begrenzenden Anschlag (42) aufweist.

## Claims

1. Device for stacking away dishes or the like, especially crockery dishes, which are output from a washing or rinsing machine, consisting of:
- a first conveyor device (10) which takes up the dishes (100) output in their washing position from the washing or rinsing machine,
- a second conveyor device (20) following the first conveyor device (10), which receives the unaligned dishes from the first conveyor device (10) and conveys them onwards successively in linearly aligned manner,
- an intermediate storage station (40, 42) in which a plurality of dishes are to be collected for joint further transport, and
- a transposing station (50) for depositing the plurality of dishes in at least one final storage station (90).

2. Device according to claim 1, characterised in that the second conveyor device (20) comprises at least in sections a transport width which corresponds essentially to the diameter of the dishes to be transported.

3. Device according to claim 1 or 2, characterised in that the transport direction of the second conveyor device (20) is aligned at an angle α to the transport direction of the first conveyor device (10).

4. Device according to claim 3, characterized in that the angle α amounts to approximately 90°.

5. Device according to one of the claims 1 to 4, characterised in that in case the washing position of the dishes does not correspond to the desired final stacking position, at least one turning station (30) is provided.

6. Device according to claim 5, characterised in that the turning station(s) (30) is (are) provided at least as a follow-on from the second conveyor device (20).

7. Device according to claim 5 or 6, characterized in that the turning station(s) each comprise(s) a platform (32) on which the dish (102) to be turned rests slidingly, wherein a slider (34) which can be moved over the platform (32) is provided which slider brings the dish (102) out over the platform (32) into a position tilted by at least 90°.

8. Device according to one of the claims 1 to 7, characterised in that the final storage station is a container (90) with spring-mounted support platform (92) for the dishes in their stacked position.

9. Device according to one of the claims 5 to 8, characterised in that ahead of the intermediate storage station (40, 42) a third conveyor device (40) is provided which transports in each case a number of dishes guided synchronously to the intermediate storage station.

10. Device according to claim 9, characterised in that the third conveyor device (40) comprises a number of conveyor belts (48) corresponding to the number of dishes to be guided synchronously, wherein webs (480) are arranged between conveyor belts (48) running adjacent to one another.

11. Device according to claim 10, characterised in that the webs (480) have a triangular cross section.

12. Device according to one of the claims 1 to 11, characterised in that the transposing station (50) comprises a number of gripper arrangements (560,562; 564, 566), corresponding to the number of dishes to be transposed, in which the dishes to be transposed are to be clamped.

13. Device according to claim 12, characterised in that the gripper arrangements (560, 562; 564, 566) are constructed as a structural unit.

14. Device according to one of the claims 9 to 13, characterised in that the third conveyor device (40) comprises at least one limit stop (42) for limiting the transport track.

## Revendications

1. Dispositif pour empiler des coupelles ou analogues, en particulier des coupelles de vaisselles, sortant d'une machine de lavage ou de rinçage, constitué d'
- un premier dispositif de transport (10), recevant les coupelles (100) sortant de la machine de lavage ou de rinçage, en étant placées à leur position de lavage,
- un deuxième dispositif de transport (20), faisant suite au premier dispositif de transport (10), recevant du premier dispositif de transport (10) les coupelles non orientées et continuant le transport, celles-ci étant orientées successivement de façon linéaire,
- un poste de stockage intermédiaire (40, 42) dans lequel une pluralité de coupelles sont collectées pour continuer conjointement leur transport, et
- un poste de changement de place (50) destiné à placer la pluralité de coupelles en au moins un poste de stockage final (90).

2. Dispositif selon la revendication 1, caractérisé en ce que le deuxième dispositif de transport (20) présente au moins, par sections, une largeur de transport, correspondant sensiblement au diamètre des coupelles à transporter.

3. Dispositif selon la revendication 1 ou 2, caractérisé en ce que la direction de transport du deuxième dispositif de transport (20) est orientée sous un angle α par rapport à la direction de transport du premier dispositif (10).

4. Dispositif selon la revendication 3, caractérisé en ce que l'angle α est d'à peu près 90°.

5. Dispositif selon l'une des revendications 1 à 4, caractérisé en ce que, dans le cas où la position de lavage des coupelles ne coïncide pas avec la position d'empilage ultime souhaitée, au moins un poste de retournement (30) est prévu.

6. Dispositif selon la revendication 5, caractérisé en ce que le ou les postes de retournement (30) est/sont prévu(s) au moins à la suite du deuxième dispositif de transport (20).

7. Dispositif selon la revendication 5 ou 6, caractérisé en ce que le ou les postes de retournement présente/présentent chacun une plate-forme (32) sur laquelle la coupelle (100) à tourner repose, d'une façon permettant un glissement, un curseur (34) déplaçable sur la plate-forme (32) étant prévu et plaçant la coupelle (102) se trouvant sur la plate-forme (32) en une position basculée d'au moins 90°.

8. Dispositif selon l'une des revendications 1 à 7, caractérisé en ce que le poste de stockage final est un conteneur (90) ayant une plate-forme de pose (92) montée sur ressort, pour les coupelles, celles-ci se trouvant à leur position d'empilage.

9. Dispositif selon l'une des revendications 5 à 8, caractérisé en ce qu'avant le poste de stockage intermédiaire (40, 42) est prévu un troisième dispositif de transport (40) transportant au poste de stockage intermédiaire, individuellement et de façon synchrone, une pluralité de coupelles.

10. Dispositif selon la revendication 9, caractérisé en ce que le troisième dispositif de transport (40) présente un nombre de bandes transporteuses (48) correspondant au nombre des coupelles à transporter de façon synchrone, des nervures (480) étant disposées entre des bandes transporteuses (48) défilant à proximité les unes des autres.

11. Dispositif selon la revendication 10, caractérisé en ce que les nervures (480) ont une section transversale triangulaire.

12. Dispositif selon l'une des revendications 1 à 11, caractérisé en ce que le poste de changement de place (50) présente un nombre de dispositifs de preneurs (560, 562; 564, 566) correspondant au nombre des coupelles à changer de place, dispositifs dans lesquels les coupelles à changer de place sont enserrées.

13. Dispositif selon la revendication 12, caractérisé en ce que les dispositifs de preneurs (560, 562; 564, 566) sont réalisés sous forme d'ensembles de construction.

14. Dispositif selon l'une des revendications 9 à 13, caractérisé en ce que le troisième dispositif de transport (40) présente au moins une butée (42) délimitant la veine de transport.
